# EUROPEAN PATENT APPLICATION

(11) **EP 2 953 086 A1**
(43) Date of publication of application: **09.12.2015**
(21) Application number: 15172163.6
(22) Date of filing: 14.06.2012
(51) Int. Cl.: G06Q 50/06

(54) **INFORMATION INTEGRATION CONTROL SYSTEM, AND INFORMATION PROCESSING PROGRAM, SOCIAL INFRASTRUCTURE OPERATION SYSTEM, OPERATION METHOD, LOCAL APPARATUS, SERVER APPARATUS, AND PROGRAM**

(30) Priority: 14.06.2011 JP 2011132703
(62) Divisional of application: 12799504.1
(71) Applicant: Kabushiki Kaisha Toshiba, Tokyo 105-8001 (JP)
(72) Inventor: SHIBUYA, Masato, Tokyo, 105-8001 (JP); IINO, Yutaka, Tokyo, 105-8001 (JP); KOBAYASHI, Yoshitaka, Tokyo, 105-8001 (JP); HIROOKA, Koichi, Tokyo, 105-8001 (JP); MATSUDA, Yoshiyuki, Tokyo, 105-8001 (JP); OCHIAI, Makoto, Tokyo, 105-8001 (JP); SUGIYAMA, Motoo, Tokyo, 105-8001 (JP)
(74) Representative: Moreland, David

(57) **Abstract**

Power demand prediction information, traffic congestion information, accident information, meteorological information, and the like are collected from social infrastructures 12A, 12B,... and an administrative server 13. Pieces of inhabitant information detected by various kinds of sensors (electricity meter, gas meter, and security sensor) in a house are collected from an inhabitant server 14. The pieces of information are stored in a database 115 in KVS and periodically updated. A calculator 114 calculates KPIs based on the information stored in the database 115 and indicators given in advance or newly given from the administration side, and creates an operation plan concerning each social infrastructure based on the calculated KPIs. Finally, the operation contents are sent to the social infrastructures 12A, 12B, . . . and the inhabitant server 14 in accordance with the operation plan.

## Description

### Technical Field

Embodiments described herein relate generally to an information integration control system which collects and integrates infrastructure information such as management and measurement information concerning various kinds of infrastructures in a predetermined area or region such as a nation, a city, or a town and provides optimization information created based on the pieces of information to meet various needs, and an information processing program used in this system.

Embodiments described herein also relate generally to a social infrastructure operation system for operating a social infrastructure, a social infrastructure operation method, a local apparatus, a server apparatus, and a program.

### Background Art

In a conventional social system, a plurality of social infrastructures are independently managed and operated. For example, optimization processing for energy saving is only executed for each infrastructure. Hence, optimization control at the region level or a household level has not been implemented yet, not to mention control on a nation basis.

### Citation List

### Patent Literature

Patent Literature 1: Jpn. Pat. Appln. KOKAI Publication No. 2011-061931

### Summary of Invention

### Technical Problem

In a certain concept, a regional community and a social infrastructure in it are regarded together as one community. There is a demand for a new management and operation method considering not only the social infrastructure but also the relationship to people in the community.

It is an object to provide an information integration control system, an information processing program, a social infrastructure operation system, an operation method, a local apparatus, a server apparatus, and a program.

### Solution to Problem

According to an aspect, an information integration control system includes a collector, a storage module and a generator. The collector collects infrastructure information concerning a social infrastructure, user information about a user who uses the social infrastructure, and management information of a manager who manages the social infrastructure and the user. The storage module stores the infrastructure information, the user information, and the management information which are collected. The generator generates control information for the social infrastructure based on the infrastructure information, the user information, and the management information which are stored in the storage module.

### Brief Description of Drawings

FIG. 1 is a block diagram showing an example of an information integration control system according to an embodiment.
FIG. 2 is a flowchart showing an operation example in which an operation instruction is executed for a social infrastructure and an inhabitant according to the embodiment shown in FIG. 1.
FIG. 3 is a flowchart showing an example of optimization processing in KPI display according to the embodiment shown in FIG. 1.
FIG. 4 is a flowchart showing a procedure of storing in KVS in information collection processing according to the embodiment shown in FIG. 1.
FIG. 5 is a flowchart showing an example of optimization processing in KPI calculation according to the embodiment shown in FIG. 1.
FIG. 6 is a flowchart showing the procedure of processing of computing an operation plan when KPIs based on a plurality of intermediate values are processed parallelly according to the embodiment shown in FIG. 1.
FIG. 7 is a flowchart showing the procedure of processing of integrating a plurality of KPI calculation results and optimizing them according to the embodiment shown in FIG. 1.
FIG. 8 is a conceptual view showing an example of a procedure of creating an EV driving plan by an existing technique.
FIG. 9 is a conceptual view showing an example of a procedure of creating an EV driving plan by the system according to the embodiment.
FIG. 10 is a system chart showing an example of a social infrastructure operation system according to the second embodiment.
FIG. 11 is a functional block diagram showing the main parts of the social infrastructure operation system according to the second embodiment.
FIG. 12 is a flowchart showing an example of the processing procedure of a local apparatus 31 according to the second embodiment.
FIG. 13 is a flowchart showing an example of a processing procedure concerning operation plan creation by a server apparatus 18.
FIG. 14 is a flowchart showing another example of the processing procedure concerning operation plan creation by the server apparatus 18.

### Description of Embodiments

### [First Embodiment]

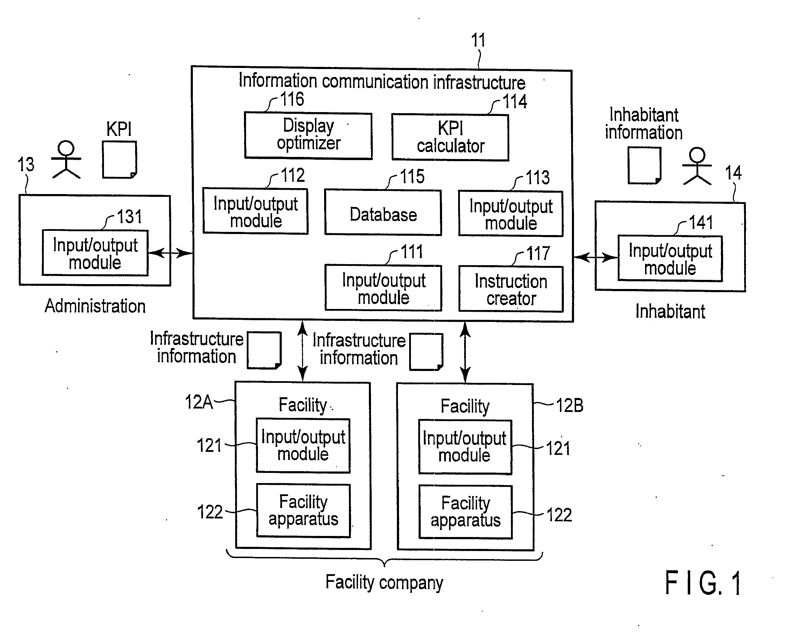

FIG. 1 is a block diagram showing an example of the arrangement of an information integration control system according to the first embodiment. This system comprises an information communication infrastructure 11, a plurality of kinds of social infrastructures (electrical, water supply, traffic, medical, and other facilities) 12A, 12B,..., an administrative (administrator) server 13, and an inhabitant (beneficiary) server 14, which can communicate with each other by connecting input/output modules 121, 131, and 141 via a network. "Inhabitants" means persons who live in the area or region where the plurality of kinds of social infrastructures 12A, 12B,... are provided. "Users" means persons who use the social infrastructures 12A, 12B,..., and forms a wider concept including inhabitants. "Administration" is a manager that manages the plurality of kinds of social infrastructures and the inhabitants (users).

The information communication infrastructure 11 integrates infrastructure information collected concerning the various kinds of social infrastructures, and optimizes and provides the information in response to a request. A function of this type can be implemented by a cloud computing system including a plurality of servers, databases, and the like. The information communication infrastructure 11 comprises a KPI (Key Performance Indicator) calculator 114, a database 115, a display optimizer 116, and an instruction creator 117.

Infrastructure information (usage state and device state) collected from a facility apparatus 122 in each of the social infrastructures 12A, 12B,..., administration information (KPIs (statistics such as a population, a birth rate, and economic indicators, various kinds of numerical values such as an energy saving ratio and a result of questionnaire) representing the operation state of the whole social infrastructure) from the administrative server 13, and inhabitant information (including information acquired from various kinds of sensors installed in a house and the like) from the inhabitant server 14 are collected via input/output modules 111 to 113 and stored in the database 115.

The database 115 is, for example, a distributed storage media and stores various kinds of information and data in, for example, KVS (Key-Value Store) format. That is, the database 115 stores information sent from, for example, the social infrastructures 12A, 12B,..., the administrative server 13, and the inhabitant server 14 in the form of a pair of key (index) and value. A key is an index used to identify each information, and a value indicates the contents (value) of information corresponding to each key.

As a feature, a key-value store database can be extended scalably and guarantee a response in a predetermined search time. It is therefore possible to, for example, store an enormous amount of data on the order of Gbyte per sec in real time. Information can be stored either directly or after processed on the social infrastructure side. In addition, information concerning a company that operates an infrastructure is arbitrarily added. Inhabitant information is assumed to be acquired from the facility of an infrastructure company, a facility installed in an inhabitant's home for another purpose, or another service used by the inhabitant.

The KPI calculator 114 calculates KPIs based on the infrastructure information acquired from the different social infrastructures 12A, 12B,..., the administration information from the administrative server 13, and the inhabitant information from the inhabitant server 14, which are stored in the database 115.

The instruction creator 117 calculates optimum instruction information for the social infrastructures 12A, 12B,..., and the inhabitant server 14 based on the calculated KPIs.

The infrastructure information may temporarily be converted into a comparable intermediate value and then converted into a KPI by the KPI calculator 114. For the processing of the KPI calculator 114, it is necessary to perform multivariable analysis for, for example, at least thousands of different indicators within a predetermined time. Hence, a cloud computing system capable of parallel processing is usable. That is, the KPI calculator 114 is implemented in a cloud computing system. The processing of calculating KPIs can be implemented as a service provided by the cloud computing system.

When storing information in the database 115, there are converted into intermediate values comparable even for a different social infrastructure or the like. The concept of the intermediate value includes not only the image of "virtual cost" but also a value that cannot be converted into cost. Examples of the intermediate value are "individual environmental load value for one hour or one day" and "individual convenience evaluation value for one hour or one day". The intermediate value may be a value such as a subset of KPIs of a city.

The display optimizer 116 changes the KPIs calculated by the KPI calculator 114 to a format easy to see for a person in evaluation verification. The KPIs in the changed format may be used as instruction information. The KPIs are sent to the social infrastructures 12A, 12B,..., the administrative server 13, and the inhabitant server 14 via the input/output modules 111 to 113 and displayed on the display devices as information for the social infrastructures, inhabitants, and administration.

Note that the administrator may set the KPIs via the input/output module 131. In this case, control information is propagated to the social infrastructures 12A, 12B,... or the inhabitant server 14 through a path reverse to that for display.

An example of an operation in the above-described system arrangement will be described below.

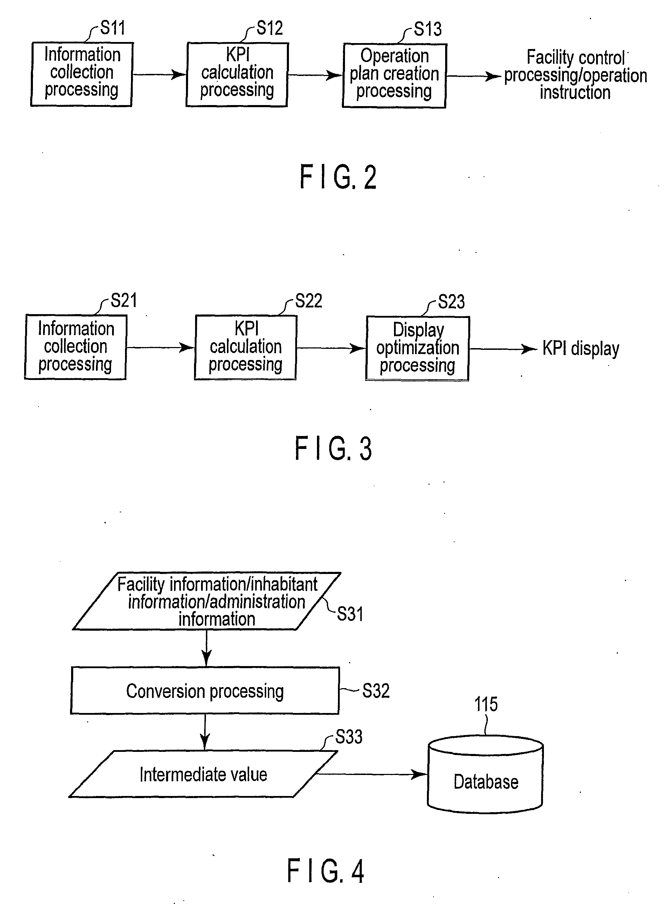

FIG. 2 illustrates an operation example in which an operation instruction is executed for a social infrastructure and an inhabitant. Referring to FIG. 2, power demand prediction information, traffic congestion information, accident information, meteorological information, and the like are collected from the social infrastructures 12A, 12B,... and the administrative server 13. Various kinds of inhabitant information detected by various kinds of sensors (electricity meter, gas meter, and security sensor) in a house are collected from the inhabitant server 14. The pieces of collected information are stored in the database 115 in KVS and periodically updated (step S11).

The calculator 114 calculates KPIs based on the information stored in the database 115 and indicators given in advance or newly given from the administration side (step S12). The calculator 114 creates an operation plan concerning each social infrastructure based on the calculated KPIs (step S13). Finally, the operation contents can be sent to the social infrastructures 12A, 12B,... and the inhabitant server 14 in accordance with the operation plan.

FIG. 3 illustrates an example of optimization processing in KPI display. Pieces of information are collected and stored in the database 115 in the above-described way (step S21). KPIs are calculated based on the information (step S22). The display optimizer 116 then converts the calculated KPIs into display contents including graphs, charts, texts, and the like easy to compare (step S23). This allows the system user to easily do determination of indicator evaluation because the KPIs are always displayed in an optimized format.

FIG. 4 illustrates a procedure of storing in KVS in the above-described information collection processing. The pieces of infrastructure information, administration information, and inhabitant information are collected (step S31). These pieces of information are converted into the form of a pair of index and value (step S32). The pieces of information are further converted into intermediate values that can easily be compared with each other (step S33) and stored in the database 115 as KVS information.

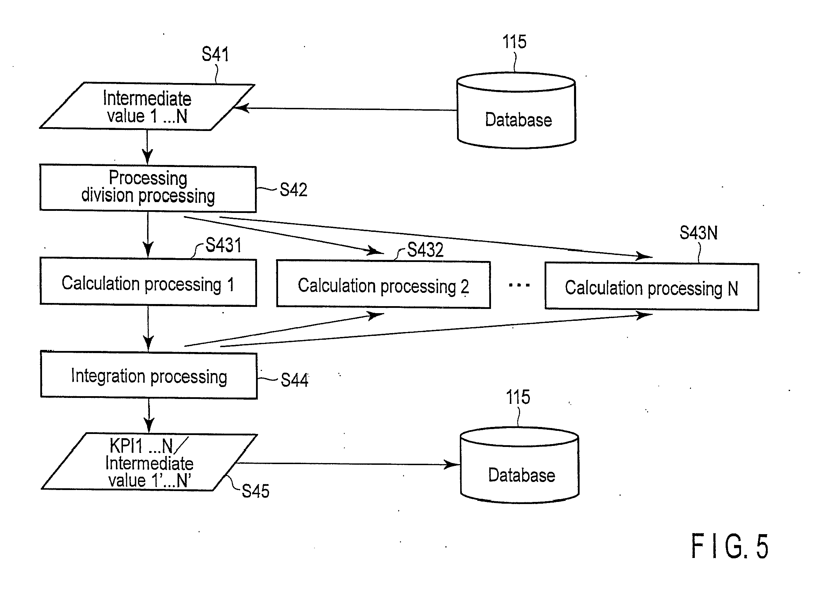

FIG. 5 illustrates an example of optimization processing in the above-described KPI calculation. Pieces of information of intermediate values 1 to N stored in KVS are extracted from the database 115 (step S41). Processing division based on the KPIs is executed (step S42). Based on the division result, processing corresponding to a KPI is executed for each of the intermediate values 1 to N (steps S431,..., S43N). The results are integrated again (step S44). Intermediate values 1' to N' that have undergone the KPI processing are calculated and stored in the database 115. As described above, when executing KPI calculation, the KPIs are divisionally calculated and integrated again. This enables to always perform optimum information processing even if the amount of data is enormous.

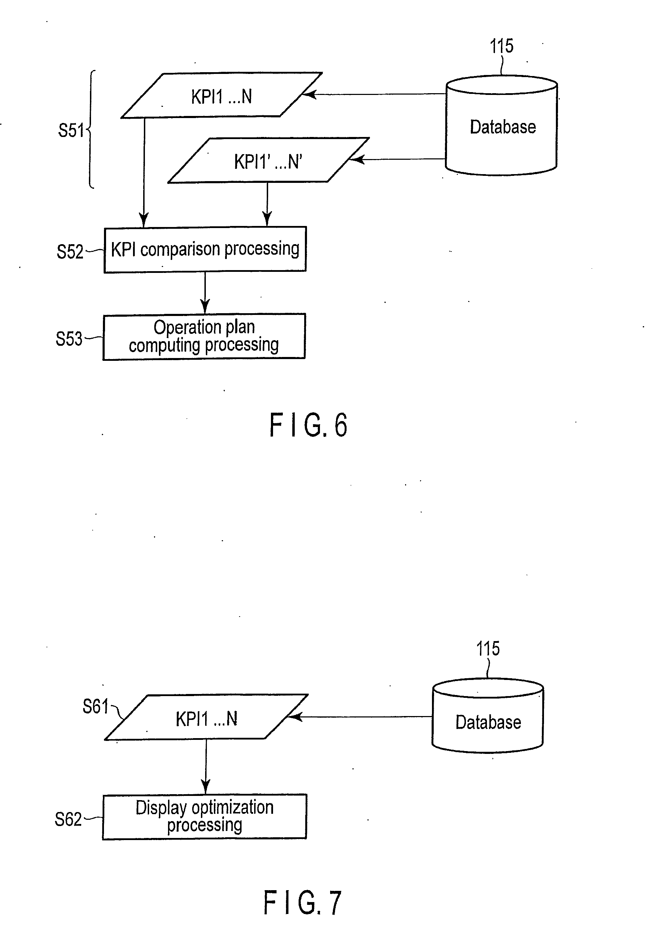

FIG. 6 illustrates a mechanism which, when KPIs based on a plurality of intermediate values are processed parallelly (step S51), compares the individual KPIs (step S52) and computes an operation plan according to parameters such as a priority (step S52). FIG. 7 illustrates a mechanism which, when a plurality of KPIs are calculated from intermediate values stored in the database 115 (step S61), integrates and optimizes the plurality of KPI calculation results (step S62) in display optimization processing S62.

As described above, in the system according to the first embodiment, pieces of information collected from the social infrastructures, administration, and inhabitant are stored in the database 115 in KVS that guarantees a response in a predetermined search time. The pieces of information are read out from the database 115 at an arbitrary timing to calculate defined KPIs which are provided in an optimum display format. It is therefore possible to properly collect management and measurement information of various kinds of infrastructures, efficiently accumulate the enormous amount of information, and execute appropriate information processing according to a request. This allows to achieve a quantum leap in implementing a smart community.

As is known, the services of conventional social infrastructure such as electrical, water supply, traffic, communication, and administrative infrastructures are provided based on the contract and procedure between the operating organizations (for example, administration) and inhabitants for each type of the infrastructures. Information accumulated and collected when providing the service of each infrastructure is used only for the service of its own but not to improve another service in principle. A smart community needs to be designed to implement cooperation by information communication throughout the social system including the social infrastructures and satisfy the following conditions:
(1) an infrastructure company can efficiently improve and operate a social infrastructure;
(2) an administrator (administration) can continuously execute operation and improvement of a whole social system; and
(3) an inhabitant can benefit from a service without degradation in convenience.

In this embodiment, using the cloud computing technology, infrastructure information, inhabitant information, and administration information throughout a social system are stored in the database 115 on the cloud, and the KPI calculator 114 calculates a social infrastructure plan or inhabitant use plan. This allows to bring a profit to the social infrastructures, the administrators and companies which operate the social infrastructures, and the inhabitants.

An example will be described next in which a profit can be brought to a traffic facility that operates a vehicle (for example, an electric vehicle (EV)), an inhabitant (driver), and an administrator by exchanging information via the system implemented in the first embodiment. The vehicle EV is an example of a social infrastructure, too, as a matter of course.

Pieces of information collected from the side of the inhabitant server 14 are the remaining battery level of the EV and the distance to the destination. Pieces of.information collected from the social infrastructures 12A, 128,... are the electricity rate that is determined by the electrical facility and varies depending on the region and time zone and the position of a charger determined by the traffic facility. Pieces of information collected from the administrative server 13 are traffic regulations to optimize traffic.

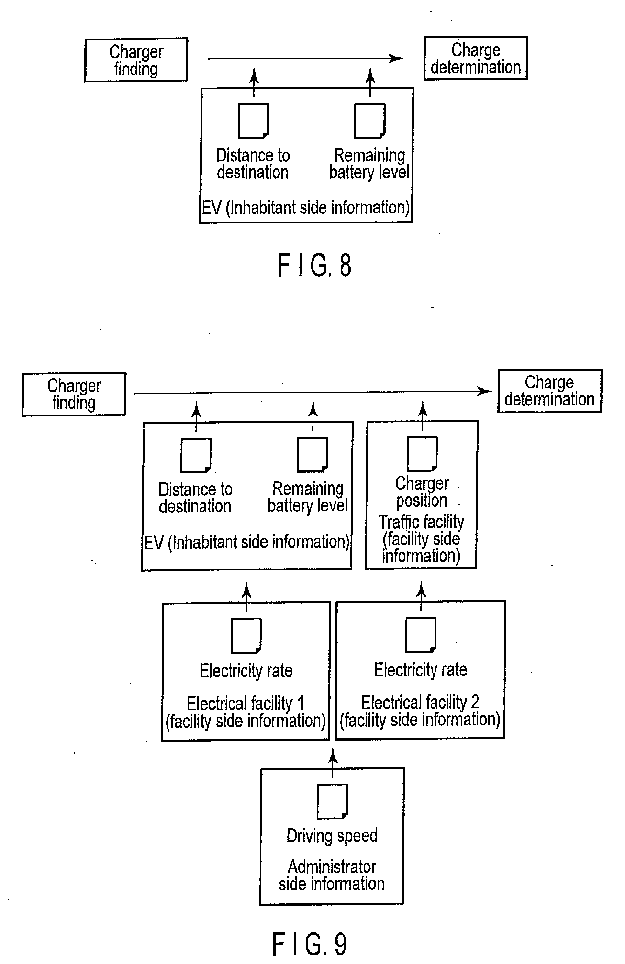

FIG. 8 is a conceptual view showing an example of a procedure of creating an EV driving plan by an existing technique. FIG. 9 is a conceptual view showing an example of a procedure of creating an EV driving plan by the system according to the embodiment.

According to the conventional EV driving plan, the driver of the EV refers to the remaining battery level and the distance to the destination, thereby estimating whether he/she can arrive at the destination without stopping halfway and charges the EV, as shown in FIG. 8. In this case, if the presence/absence of a charger on the way ahead is unknown, drivers in a certain ratio charge the battery as a precaution based on the insufficient information. At the time of charging, if the supply of electricity is tight with respect to the demand, the facility company is disadvantageously forced into an inefficient operation because of the small margin of the electrical facility. Simultaneously, the EV driver (inhabitant) also suffers the disadvantage of the high electricity rate.

If infrastructure information acquired from another facility can be referred to from a point, an operation plan can be created based on the next charger position acquired from the traffic facility (facility-side information) so as to make full use of the electricity remaining in the battery and charge it in a smaller stop count, as shown in FIG. 9. In addition, the operation plan can be created based on the electricity rates acquired from electrical facilities 1 and 2 to select a charger capable of charging at a lower cost. Furthermore, whether the operation plan is applicable can be determined based on, for example, traffic regulation information (driving speed and the like) provided by the administration.

To implement this, the system according to the first embodiment comprises information collection processing of acquiring information from the inhabitant, the administration, and the social infrastructures, the database 115 that enables to refer to necessary information altogether in a short time at one point, and the KPI calculator 114 that performs calculation for optimization in a short time. This allows to flexibly and properly execute an operation instruction for various social infrastructures.

As described above, according to the first embodiment, it is possible to collect infrastructure information such as management and measurement information concerning various kinds of infrastructures and execute appropriate information processing according to a request.

### [Second Embodiment]

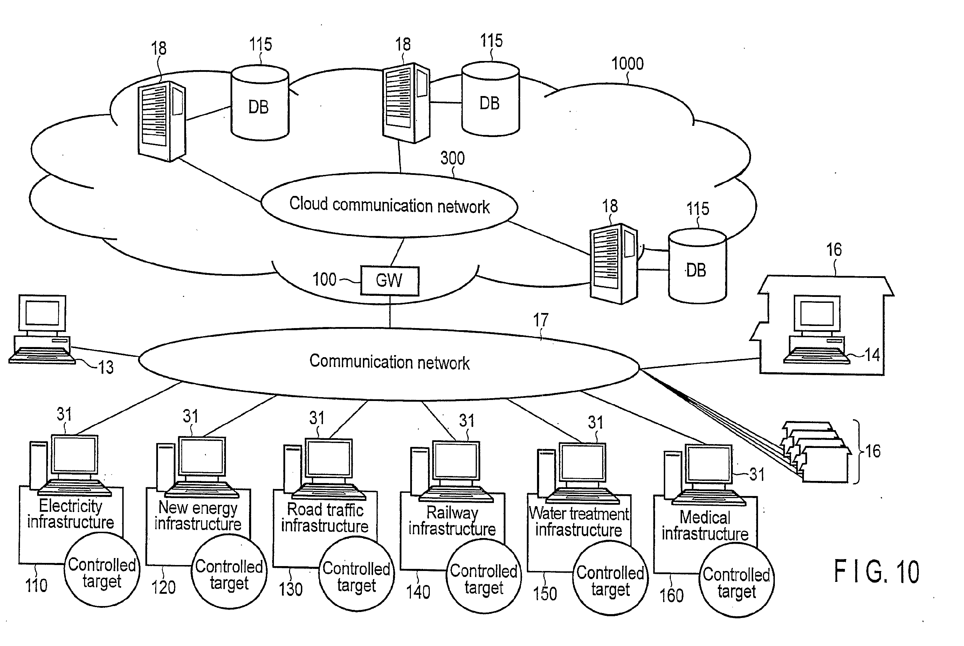

FIG. 10 is a system chart showing an example of a social infrastructure operation system according to the second embodiment. FIG. 10 illustrates an electricity infrastructure 110, a new energy infrastructure 120, a road traffic infrastructure 130, a railway infrastructure 140, a water treatment infrastructure 150, and a medical infrastructure 160 as examples of social infrastructures. That is, the social infrastructure operation system can target a plurality of social infrastructures of different types. The social infrastructures are not limited to those, and there are a variety of social infrastructures such as a heat supply infrastructure, a communication infrastructure, and a building infrastructure. In comparison between FIG. 10 and FIG. 1, the infrastructures 110 to 160 (FIG. 10) correspond to the social infrastructures 12A, 12B,... (FIG. 1).

The electricity infrastructure 110 can include power stations, power plants, and power grids. The new energy infrastructure 120 is an infrastructure concerning renewable energies, including electricity storage SCADA (Supervisory Control And Data Acquisition) and PV (photovoltaic) systems. The road traffic infrastructure 130 can include traffic lights, highway networks, and general road networks.

The railway infrastructure 140 can include railway networks, vehicles, and ticket reservation centers. The water treatment infrastructure 150 can include water supply/sewerage and filter plants. The medical infrastructure 160 can include hospitals, hospital facilities, various kinds of modalities (CT scanner, X-ray diagnostic apparatus, MRI imaging apparatus, and the like), and a network in a hospital. Each of the infrastructures (social infrastructures) 110 to 160 has a unique control target. The control targets of the infrastructures will generically be referred to as controlled targets hereinafter.

The infrastructures 110 to 160 are connected to a communication network 17. A cloud computing system 1000 is connected to the communication network 17 via a gateway (GW) 100. The communication network 17 of this embodiment is a guarantee-type network capable of guaranteeing the communication speed.

That is, in the embodiment, the cloud computing system 1000 and the infrastructures 110 to 160 are connected via a network capable of guaranteeing the communication band. Examples of a network of this type include a VPN (Virtual Private Network) constructed in an IP (Internet Protocol) network as well as a dedicated line using an optical communication technology. Using a communication network of this type allows to guarantee immediacy in information transfer.

An administrative server 13 is connected to the communication network 17. Imparting the function of the upper layer of the system to the administrative server 13 makes it possible to comprehensively control the target social system. In such a case, the administrative server 13 is sometimes called, for example, an SCMS (Smart Community Management System) server.

A plurality of households (to be referred to as subscriber homes 16 hereinafter) are also connected to the communication network 17. For example, the function of an inhabitant server 14 (FIG. 1) can be implemented in a personal computer installed in each subscriber home 16. Alternatively, the function of the inhabitant server 14 may be imparted to the server apparatus of an HEMS (Home Energy Management System) that is an energy management system formed in each home. The subscriber homes 16 and the HEMS are also included in the social infrastructures, as a matter of course.

The cloud computing system 1000 is constituted by, for example, a company (vendor) that provides the service according to the embodiment. An example is a data center. The cloud computing system 1000 comprises a server apparatus 18 and a database 115.

The server apparatus 18 can be formed as a single computer or an integral of a plurality of computers. The database 115 can be either provided in one computer or distributed to a plurality of computers. In this embodiment, a form including a plurality of server apparatuses 18 and a plurality of databases 115 is assumed. In this form, the server apparatuses 18 are connected to each other via a cloud communication network 300.

In the embodiment, each of the infrastructures 110 to 160 comprises a local apparatus 31. Each local apparatus 31 can locally control a corresponding one of the infrastructures 110 to 160, as needed. That is, the local apparatus 31 has a unique control function to control the controlled target of each infrastructure.

Note that each of the administrative server 13, the inhabitant server 14, the local apparatus 31, and the server apparatus 18 is formed from a computer comprising a CPU (Central Processing Unit).

For example, in the electricity infrastructure 110, the local apparatus 31 has a function of controlling electricity distribution for each consumer. In the new energy infrastructure 120, the local apparatus 31 has a function of measuring the power generation amount of the PV system based on meteorological information. In the road traffic infrastructure 130, the local apparatus 31 has a function of performing traffic control on roads.

In the railway infrastructure 140, the local apparatus 31 has a function of performing operation management of railways. In the water treatment infrastructure 150, the local apparatus 31 has a function of controlling the flow rate of water supplies or controlling the pondages of irrigation water and dams. In the medical infrastructure 160, the local apparatus 31 has a function of performing various kinds of control for data input interfaces, interpretation monitors, and LAN in hospitals or accumulating various kinds of medical data.

Each local apparatus 31 is connected to the communication network 17 so as to perform information communication with the server apparatus 18, acquire various kinds of data from the database 115, or accumulate various kinds of data in the database 115 via the server apparatus 18. That is, the local apparatuses 31 and the server apparatuses 18 are connected via the communication network 17 so as to perform information communication with each other.

The server apparatus 18 has a function of giving the local apparatus 31 various kinds of instruction information (including a command and control data) to control the controlled target. That is, the server apparatus 18 is placed as the upper layer of the local apparatus 31 or the infrastructures 110 to 160.

The database 115 accumulates infrastructure information (sensing data) concerning the social infrastructures. Examples of the infrastructure information are meter data, sensor data, traffic, GPS (Global Positioning System) data, life log, and the like from various kinds of monitor control systems such as a smart meter, various kinds of sensors, a network monitoring apparatus, an MDMS (Meter Data Management System), and a core system (billing system). That is, infrastructure information is an amount measured by some measurement means or information given from a human to a system. These data are enormous in amount and are therefore called BigData in fields associated with cloud computing.

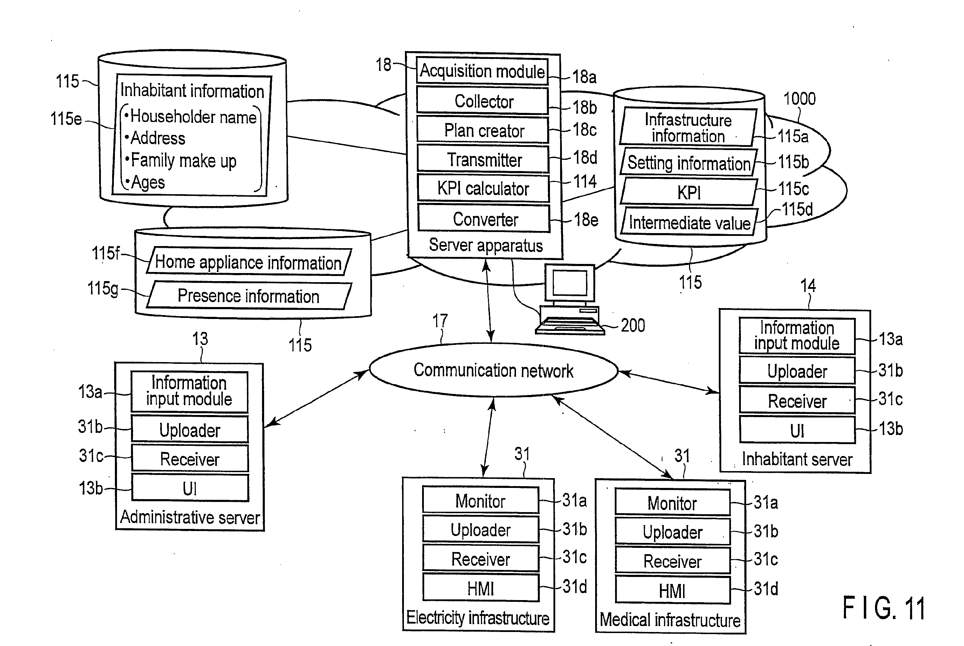

FIG. 11 is a functional block diagram showing the main parts of the social infrastructure operation system according to the second embodiment. FIG. 11 illustrates a case mainly associated with the electricity infrastructure, the medical infrastructure and the traffic infrastructure that are social infrastructures.

Each of the local apparatus 31 of the electricity infrastructure and the local apparatus 31 of the medical infrastructure comprises a monitor 31a, an uploader 31b, a receiver 31c, and a human-machine interface (HMI) 31d as processing functions according to the embodiment.

The monitor 31a monitors infrastructure information concerning the social infrastructure as the control target. The uploader 31b uploads and transmits the infrastructure information to the server apparatus 18 via the communication network 17. The receiver 31c receives an operation plan of the social infrastructure as the control target from the server apparatus 18. The HMI 31d notifies the user (for example, system operator) of the social infrastructure of the received operation plan by, for example, graphically displaying it.

The administrative server 13 comprises an information input module 13a, and a user interface (UI) 13b in addition to the uploader 31b and the receiver 31c as processing functions according to the embodiment. The information input module 13a inputs information necessary for accomplishing, for example, an administrative service, such as inhabitant information concerning an inhabitant. That is, information managed by the municipality in the region where the social infrastructure is constituted can be regarded as the inhabitant information.

The inhabitant information is handled like the infrastructure information and uploaded and transmitted to the server apparatus 18 by the uploader 31b. The UI 13b notifies the user (for example, administrative official) of the social infrastructure of an operation plan received from the server apparatus 18 by, for example, graphically displaying it, like the HMI 31d.

Similarly, the inhabitant server 14 comprises the information input module 13a, the uploader 31b, the receiver 31c, and the user interface (UI) 13b. In the inhabitant server 14, the information input module 13a is used to input information concerning electrical devices (for example, home appliances such as an air conditioner, an illumination, a TV, and a home medical facility, a PV system, a fuel cell, and a storage battery) installed in the subscriber home 16 (inhabitant home) in addition to the above-described inhabitant information. These pieces of information (home appliance information) are handled like the infrastructure information and uploaded and transmitted to the server apparatus 18 by the uploader 31b. The UI 13b notifies the home user (for example, subscriber) of an operation plan received from the server apparatus 18 by, for example, graphically displaying it.

The server apparatus 18 comprises an acquisition module 18a, a collector 18b, a plan creator 18c, a transmitter 18d, a KPI calculator 114, and a converter 18e as processing functions.

The acquisition module 18a acquires infrastructure information uploaded and transmitted from the social infrastructures from the local apparatuses 31, the administrative server 13, and the inhabitant server 14 via the communication network 17. The acquired infrastructure information is accumulated in the database 115 (infrastructure information 115a). Note that setting information acquired from the administrative server 13 is also accumulated in the database 115 (setting information 115b). The setting information is information concerning, for example, control of traffic lights in the road traffic infrastructure 130.

The collector 18b collects inhabitant information from the administrative server 13 and the inhabitant server 14 via the communication network 17. The collected inhabitant information is accumulated in the database 115 (inhabitant information 115e).

The inhabitant information can include information of, for example, the householder name, the address, the family make-up, and the ages of the family members. These pieces of information are based on a basic register of inhabitants (or census register information) managed by the municipality and can be uploaded from the administrative server 13. In addition, information about the hobbies and preferences of inhabitants or part of the home appliance information (for example, device name or special setting information) can be uploaded directly from the inhabitant server 14 to the system as one form of the inhabitant information. A web page using the CGI (Common Gateway Interface) technology or the like is usable as the interface.

The collector 18b also collects home appliance information 115f and presence information 115g from the inhabitant server 14 and accumulates them in the database 115. The presence information represents the presence/absence of an inhabitant or the like in the subscriber home. Information of this type can easily be collected using SIP (Session Initiation Protocol) well known in an IP (Internet Protocol) telephone system that has recently achieved noticeable proliferation. Using the presence information enables to distinguish states such as "calling", "using computer", and "in meeting" in addition to the presence/absence.

The plan creator 18c creates operation plans of the infrastructures including the home appliances using at least one of the infrastructure information 115a, the setting information 115b, the inhabitant information 115e, the home appliance information 115f, and the presence information 115g accumulated in the database 115. The transmitter 18d transmits the created operation plans to the administrative server 13, the inhabitant server, and the local apparatuses 31.

The KPI calculator 114 calculates a KPI as a key performance indicator based on at least one of the infrastructure information 115a, the setting information 115b, the inhabitant information 115e, the home appliance information 115f, and the presence information 115g accumulated in the database 115. The calculated KPI is accumulated in the database 115 (KPI 115c).

The converter 18e converts the infrastructure information acquired from each of the local apparatuses 31, the administrative server 13, and the inhabitant server 14 into an intermediate value comparable at least between the electricity infrastructure and the medical infrastructure. The calculated intermediate value is accumulated in the database 115 (intermediate value 115d).

Note that the plan creator 18c may create an operation plan based on the KPI 115c. The plan creator 18c may create an operation plan for each social infrastructure based on the intermediate value 115d, the infrastructure information from the electricity infrastructure and the medical infrastructure, and the setting information and inhabitant information from the administration and the inhabitant. For example, the operation plan of a vehicle EV from charger finding to charge determination described with reference to FIG. 9 generally reflects infrastructure information provided by the vehicle EV, the electricity infrastructure, the road traffic infrastructure, and the administrative service.

Note that in the above-described arrangement, an SCMS server 200 may be connected to the server apparatus 18 to comprehensively control the target social system. The SCMS server 200 is operated by, for example, the vendor of the cloud computing system 1000. The functions of the above-described arrangement will be described next.

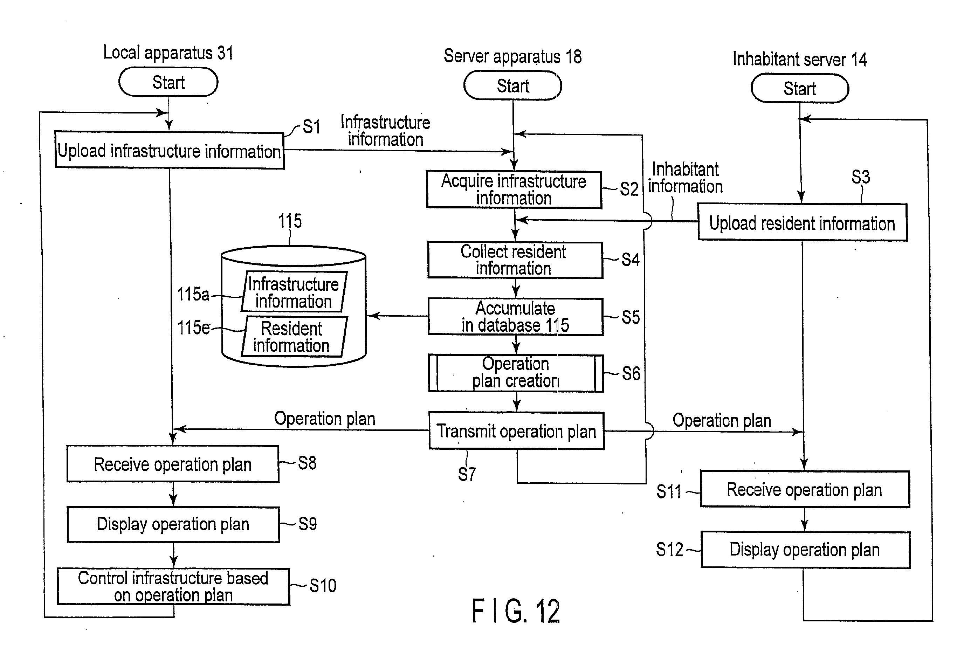

FIG. 12 is a flowchart showing an example of the processing procedure of the local apparatus 31 and the server apparatus 18 according to the second embodiment. Referring to FIG. 12, for example, the local apparatus 31 of the medical infrastructure 160 collets infrastructure information concerning the control target and uploads and transmits the collected infrastructure information to the server apparatus 18 via the communication network 17 (step S1). The server apparatus 18 acquires the infrastructure information transmitted from the local apparatus 31 (step S2).

The inhabitant server 14 uploads and transmits the inhabitant's inhabitant information to the server apparatus 18 via the communication network 17 (step S3). The server apparatus 18 collects the inhabitant information transmitted from the inhabitant server 14 (step S4).

The server apparatus 18 accumulates the acquired infrastructure information (infrastructure information 115a) and the collected inhabitant information (inhabitant information 115e) in the database 115 (step S5). The setting information 115b, the home appliance information 115f, and the presence information 115f are also accumulated in the database 115, as shown in FIG. 11.

The server apparatus 18 reads out, from the database 115, infrastructure information and inhabitant information necessary for creating the operation plan of the medical infrastructure and creates the operation plan (step S6). The server apparatus 18 then transmits the created operation plan to the local apparatus 31 and the inhabitant server 14 (step S7).

The local apparatus 31 receives the operation plan transmitted from the server apparatus 18 (step S8) and stores it in an internal memory (not shown). The local apparatus 31 notifies the user of the received operation plan by, for example, displaying it on a display (step S9). The local apparatus 31 controls each social infrastructure in the medical infrastructure 160 based on the operation plan (step S10).

On the other hand, the inhabitant server 14 receives the operation plan transmitted from the server apparatus 18 (step S11) and stores it in an internal memory (not shown). The inhabitant server 14 notifies the user of the received operation plan by, for example, displaying it on a display (step S12).

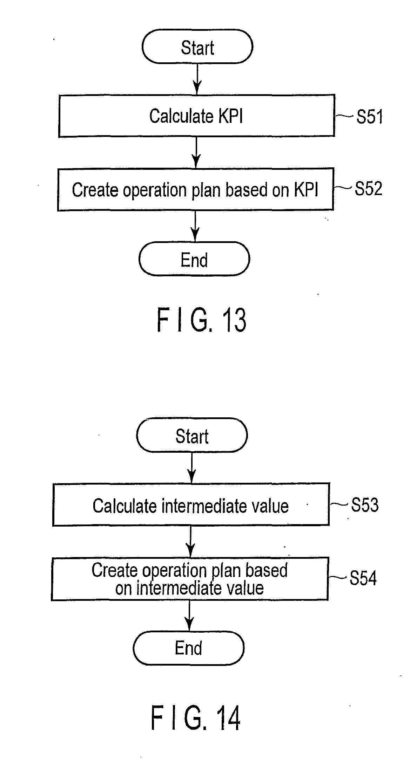

FIG. 13 is a flowchart showing an example of the processing procedure of the server apparatus 18 in step S6 shown in FIG. 12. The server apparatus 18 calculates the KPI 115c as a key performance indicator based on the infrastructure information 115a and inhabitant information 115e accumulated in the database 115 (step S51). The server apparatus 18 creates the operation plan of each social infrastructure based on the calculated KPI 115c (step S52).

FIG. 14 is a flowchart showing another example of the processing procedure of the server apparatus 18 in step S6 shown in FIG. 12. The server apparatus 18 calculates the intermediate value 115d of the infrastructure information 115a based on the infrastructure information 115a accumulated in the database 115 (step S53). The server apparatus 18 creates the operation plan of each social infrastructure based on the calculated intermediate value 115d and the inhabitant information 115e (step S54).

Note that infrastructure information acquisition and inhabitant information collection need not be repeated every time an operation plan is created in step S6. For example, when an operation plan is assumed to be created in a cycle of 30 min, the infrastructure information may be acquired in a cycle of 1 hr or longer, and the inhabitant information may be collected in a cycle of 1 day or longer. Only when the infrastructure information and inhabitant information have changed, the server apparatus 18 may be notified of them. The processing procedure shown in FIG. 12 will be described next in detail.

In the second embodiment, infrastructure information and inhabitant information are uploaded to the cloud computing system 1000. The cloud computing system 1000 calculates the operation plan of each social infrastructure based on these pieces of information. An example will be described below in association with real-time control that is an important concept of infrastructure control.

A demand response is known as a control form concerning the electricity infrastructure 110. The demand response is a mechanism in which when the electricity supply capability is tight as compared to the needs, the electricity supplier requests power saving of the consumers (demand), and the consumers meet that request (response). For example, when a power plant is destructed by unexpected disasters, the immediacy of the demand response is particularly required to prevent a blackout in a wide range.

In the second embodiment, pieces of information concerning the social infrastructures and inhabitants are collected by the guarantee-type communication network 17. An operation plan is calculated by the capability of the cloud computing system 1000. This makes it possible to implement real-time control itself.

However, blindly cutting electricity to the consumers may be life-threatening for some people depending on the statuses of individual inhabitants. For example, if an operation plan for power saving is applied to a home where an elderly person or a person who requires nursing care is living, even the medical equipment may stop.

To prevent this, in the second embodiment, an operation plan is calculated in consideration of inhabitant information. For example, when a power company requires (demands) energy saving, the electricity is preferentially distributed to homes, hospitals, buildings, and the like where elderly people or sick people are living, and an optimum operation plan for a range except these places is created to perform individual control.

The inhabitant information can include not only information acquired from various kinds of sensors installed in a house or the like, information such as the householder name, the address, the family make-up, and the ages of the family members, information about the hobbies and preferences of inhabitants, and home appliance information, as already described, but also information of the health states of inhabitants, family doctor, the names of hospitals to visit or stay, the lists of medicines being taken, and the like. As these pieces of information, information uploaded from the medical infrastructure 160 to the cloud computing system 1000 may be used. Information of, for example, body temperature and blood pressure may be obtained by uploading, to the cloud computing system 1000, data temporarily collected in the HEMS using the communication means provided in a thermometer and a sphygmomanometer.

Information to be used to determine the priority at the time of the demand response can be information described in the basic register of inhabitants or information given via the inhabitant server 14. For example, an intention about whether or not to accept a power saving request is expressed for the system using the inhabitant server 14, and this information is registered in the database 115. This makes it possible to preferentially distribute electricity to a user who does not accept the request independently of the presence/absence of medical equipment in the home. However, such priority control needs administrative check from the viewpoint of fairness.

As described above, according to the second embodiment, it is possible to implement the demand response reflecting even the actual conditions of each inhabitant's life, that is, implement a conditional demand response. This allows, by extension, to implement a more sophisticated and delicate community service based on more accurate inhabitant information.

As described above, according to the second embodiment, the user of a social infrastructure can receive an optimum operation plan by using the resource of the cloud computing system 1000. In addition to the demand response, the driver (user) of the vehicle EV can receive an optimum operation plan by operating a navigation system (local apparatus 31), as described in, for example, the first embodiment.

The vendor of the cloud computing system 1000 can also form a business model that profits from charging when providing an operation plan to the user of each social infrastructure. Consideration for inhabitants belonging to a community is never neglected when forming a smart social infrastructure, as a matter of course. This makes it possible to provide a social infrastructure operation system capable of forming a smart social infrastructure, an operation method, a local apparatus, a server apparatus, and a program.

### [Modification of Second Embodiment]

In the flowchart of FIG. 12, after the operation plan is displayed on the local apparatus 31 (step S9), the social infrastructure is immediately controlled (step S10). Instead, a procedure of inquiring of a person about whether or not to permit control based on the operation plan may be inserted between steps S9 and S10. For example, an interface (for example, clickable approve button) to approve the operation plan may the displayed on the screen of a display device together with the operation plan. Control based on the operation plan may start only when the user has clicked on the approve button. The person who approves the operation plan may be the operator of the target social infrastructure. Alternatively, an administrative official may determine whether or not to approve the operation plan. In this case, the operation plan is displayed not only on the HMI 31d of the local apparatus 31 but also on the user interface (UI) 13b of the administrative server 13. When the approve button is displayed only on the UI 13b of the administrative server 13, the determination about whether or not to approve the operation plan can be left to the administrative official. A plurality of operation plans may be calculated to allow to selectively designate one of them.

Note that the present invention is not limited to the above-described embodiments. For example, in FIG. 11, the converter 18e is provided in the server apparatus 18 so that the server apparatus 18 executes processing of converting infrastructure information into an intermediate value. Instead, the converter 18e may be provided in each of the local apparatuses 31, the administrative server 13, and the inhabitant server 14, and a locally generated intermediate value may be uploaded to the server apparatus 18.

In the second embodiment, the demand response aiming at individual homes or buildings has been described. Instead, optimization control for each area (area with many hospitals or elderly inhabitants) or each community is also possible.

While certain embodiments of the invention have been described, these embodiments have been presented by way of example only, and are not intended to limit the scope of the inventions. Indeed, the novel methods and systems described herein may be embodied in a variety of other forms; furthermore, various omissions, substitutions and changes may be made without departing from the spirit of the invention. The accompanying claims and their equivalents are intended to cover the embodiments and modifications thereof as would fall within the scope and spirit of the inventions. Reference Signs List
11...information communication infrastructure
12A, 12B,...social infrastructure (electrical, water supply, traffic, medical, and other infrastructures)
13...administrative server
14...inhabitant server
121, 131, 141...input/output module
114...KPI (Key Performance Indicator) calculator
115...database
116...display optimizer
117...instruction creator
110...electricity infrastructure
120...new energy infrastructure
130...road traffic infrastructure
140...railway infrastructure
150...water treatment infrastructure
160...medical infrastructure
16...subscriber home
17...communication network
100...gateway (GW)
1000...cloud computing system
18...server apparatus
300...cloud communication network
200...SCMS server
31...local apparatus
31a...monitor
31b...uploader
31c...receiver
31d...human-machine interface (HMI)
13a...information input module.
13b...user interface (UI)
18a...acquisition module
18b...collector
18c...plan creator
18d...transmitter
18e...converter
115a...infrastructure information
115b...setting information
115c...KPI
115d...intermediate values
115e...inhabitant information
115f...home appliance information
115g...presence information

Further embodiments are set out in the following clauses:
1. An information integration control system comprising:
   a collector configured to collect infrastructure information concerning a social infrastructure, user information about a user who uses the social infrastructure, and management information of a manager who manages the social infrastructure and the user;
   a storage module configured to store the infrastructure information, the user information, and the management information which are collected; and
   a generator configured to generate control information for the social infrastructure based on the infrastructure information, the user information, and the management information which are stored in the storage module.
2. The information integration control system of clause 1, further comprising:
   a calculator configured to calculate a key performance indicator based on the pieces of information stored in the storage module; and
   an instruction creator configured to create at least one of instruction information for the social infrastructure, user instruction information for the user, and manager instruction information for the manager based on the key performance indicator.
3. The information integration control system of clause 1, wherein the storage module comprises a key-value store database configured to store collected information as a pair of a key to identify the information and a value corresponding to the key.
4. The information integration control system of clause 1, wherein the calculator is implemented in a cloud computing system.
5. The information integration control system of clause 1, wherein the storage module converts the infrastructure information into an intermediate value comparable between a plurality of social infrastructures and stores the intermediate value.
6. The information integration control system of clause 1, further comprising a display optimizer configured to convert the key performance indicator into a format suitable for display.
7. An information processing program to be executed by a computer, the program causing the computer to:
   collect infrastructure information concerning a social infrastructure, user information about a user who uses the social infrastructure, and management information of a manager who manages the social infrastructure and the user;
   store, in a storage module, the infrastructure information, the user information, and the management information which are collected; and
   generate control information for the social infrastructure based on the infrastructure information, the user information, and the management information which are stored in the storage module.
8. A social infrastructure operation system comprising:
   a local apparatus provided in a social infrastructure; and
   a server apparatus connected to the local apparatus via a communication network,
   the local apparatus comprising
   an uploader configured to upload infrastructure information concerning the social infrastructure to the server apparatus via the communication network, and
   a receiver configured to receive an operation plan of the social infrastructure from the server apparatus, and
   the server apparatus comprising
   an acquisition module configured to acquire the infrastructure information from the local apparatus via the communication network,
   a collector configured to collect, via the communication network, inhabitant information of an inhabitant in a region the social infrastructure concerns,
   a database configured to accumulate the acquired infrastructure information and the collected inhabitant information,
   a plan creator configured to create the operation plan based on the infrastructure information and the inhabitant information which are accumulated in the database, and
   a transmitter configured to transmit the created operation plan to the local apparatus.
9. The social infrastructure operation system of clause 8, wherein the inhabitant information includes information managed by a municipality in the region.
10. The social infrastructure operation system of clause 8, wherein the inhabitant information includes information concerning an electrical device installed in an inhabitant home.
11. The social infrastructure operation system of clause 8, wherein the server apparatus further comprises a calculator configured to calculate a key performance indicator based on the infrastructure information and the inhabitant information which are accumulated in the database, and
   the plan creator creates the operation plan based on the calculated key performance indicator.
12. The social infrastructure operation system of clause 8, wherein
   the server apparatus further comprises a converter configured to convert the acquired infrastructure information into an intermediate value comparable between a plurality of different types of social infrastructures,
   the database accumulates the infrastructure information converted into the intermediate value, and
   the plan creator creates the operation plan for each of the plurality of social infrastructures based on the intermediate value.
13. The social infrastructure operation system of clause 8, wherein the server apparatus is provided in a cloud computing system comprising the database.
14. An operation method applicable to a social infrastructure operation system comprising a local apparatus provided in a social infrastructure, and a server apparatus connected to the local apparatus via a communication network, the method comprising:
   in the local apparatus,
   uploading infrastructure information concerning the social infrastructure to the server apparatus via the communication network; and
   receiving an operation plan of the social infrastructure from the server apparatus, and
   in the server apparatus,
   acquiring the infrastructure information via the communication network;
   collecting, via the communication network, inhabitant information of an inhabitant in a region the social infrastructure concerns;
   accumulating the acquired infrastructure information and the collected inhabitant information in a database;
   creating the operation plan based on the infrastructure information and the inhabitant information which are accumulated in the database; and
   transmitting the created operation plan to the local apparatus.
15. The operation method of clause 14, wherein the inhabitant information includes information managed by a municipality in the region.
16. The operation method of clause 14, wherein the inhabitant information includes information concerning an electrical device installed in an inhabitant home.
17. The operation method of clause 14, wherein
   the server apparatus further calculates a key performance indicator based on the infrastructure information and the inhabitant information which are accumulated in the database, and
   in the creating, the operation plan is created based on the calculated key performance indicator.
18. The operation method of clause 14, wherein
   the server apparatus further converts the acquired infrastructure information into an intermediate value comparable between a plurality of different types of social infrastructures,
   in the creating, the operation plan for each of the plurality of social infrastructures is created based on the intermediate value.
19. A local apparatus provided in a social infrastructure, comprising:
   an uploader configured to upload, via a communication network, infrastructure information concerning the social infrastructure to a server apparatus connected via the communication network;
   a transmitter configured to transmit inhabitant information of an inhabitant in a region the social infrastructure concerns to the server apparatus via the communication network; and
   a receiver configured to receive an operation plan of the social infrastructure from the server apparatus.
20. A server apparatus connected, via a communication network, to a local apparatus provided in a social infrastructure, comprising:
   an acquisition module configured to acquire infrastructure information concerning the social infrastructure from the local apparatus via the communication network;
   a collector configured to collect, via the communication network, inhabitant information of an inhabitant in a region the social infrastructure concerns;
   a database configured to accumulate the acquired infrastructure information and the collected inhabitant information;
   a plan creator configured to create the operation plan based on the infrastructure information and the inhabitant information which are accumulated in the database; and
   a transmitter configured to transmit the created operation plan to the local apparatus.
21. The server apparatus of clause 20, further comprising a calculator configured to calculate a key performance indicator based on the infrastructure information and the inhabitant information which are accumulated in the database,
   wherein the plan creator creates the operation plan based on the calculated key performance indicator.
22. The server apparatus of clause 20, further comprising a converter configured to convert the acquired infrastructure information into an intermediate value comparable between a plurality of different types of social infrastructures,
   wherein the plan creator creates the operation plan for each of the plurality of social infrastructures based on the intermediate value.
23. A program to be executed by a computer, the program comprising:
   acquiring infrastructure information concerning a social infrastructure from a local apparatus provided in the social infrastructure;
   collecting inhabitant information of an inhabitant in a region the social infrastructure concerns from the local apparatus;
   accumulating the acquired infrastructure information and the collected inhabitant information in a database;
   creating an operation plan of the social infrastructure based on the infrastructure information and the inhabitant information which are accumulated in the database; and
   transmitting the created operation plan to the local apparatus.
24. The program of clause 23, further comprising calculating a key performance indicator based on the infrastructure information and the inhabitant information which are accumulated in the database,
   wherein in the creating, the operation plan is created based on the calculated key performance indicator.
25. The program of clause 23, further comprising converting the acquired infrastructure information into an intermediate value comparable between a plurality of different types of social infrastructures,
   wherein in the creating, the operation plan for each of the plurality of social infrastructures is created based on the intermediate value.

## Claims

1. A social infrastructure operation apparatus used in a social infrastructure operation system including a monitor (31 a) which monitors an infrastructure, and configured to operate the infrastructure based on a relationship with a predetermined area or region including the infrastructure, the social infrastructure operation apparatus comprising:
an infrastructure information storage module (115a) which stores infrastructure information on the infrastructure acquired from the monitor (31 a) regarding the predetermined area or region;
a key performance indicator calculator (114) which calculates a key performance indicator regarding the predetermined area or region based on inhabitant information relating to the predetermined area or region, and the infrastructure information relating to management of the predetermined area or region; and;
a key performance indicator storage module (115c) which stores the key performance indicator calculated by the key performance indicator calculator (114).

2. A social infrastructure operation apparatus as recited in claim 1,
wherein the key performance indicator calculator (114) calculates a key performance indicator from the key performance indicator stored in the key performance indicator storage module (115c) based on an index given by an input module which deals with the management of the predetermined area or region.

3. A social infrastructure operation apparatus as recited in either of claims 1 or 2, further comprising:
an infrastructure information receiver which receives infrastructure information on the infrastructure acquired from the monitor (31a) regarding the predetermined area or region and wherein
the infrastructure information storage module (115a) stores the infrastructure information received by the infrastructure information receiver (18).

4. A social infrastructure operation apparatus as recited in any preceding claim further comprising:
an inhabitant information storage module (115e) which stores inhabitant information relating to the predetermined area or region and unique to the inhabitant wherein the key performance indicator calculator (114) is configured to calculate an key performance indicator for the predetermined area or region based on the infrastructure information stored in the infrastructure information storage module (115a) and the inhabitant information stored in the inhabitant information storage module (115e).

5. A social infrastructure operation apparatus as recited in claim 3, further comprising:
an inhabitant information acquisition module (18) which acquires the inhabitant information from the inhabitant information storage apparatus (115e); and
an inhabitant information storage module which stores the inhabitant information acquired by the inhabitant information acquisition module wherein
the key performance indicator calculator (114) is configured to calculate an key performance indicator for the predetermined area or region based on the infrastructure information stored in the infrastructure information storage module and the inhabitant information stored in the inhabitant information storage module (115e).

6. A social infrastructure operation apparatus according to any preceding claim, wherein the monitor (31 a) is locally provided and connected to the key perfomance indicator calculator (114) via a communications network 17.

7. An information processing method performed by a social infrastructure operation apparatus used in a social infrastructure operation system including a monitor (31 a) which monitors an infrastructure, and configured to operate the infrastructure based on a relationship with a predetermined area or region including the infrastructure, the method comprising:
storing in an infrastructure information storage module (115a) infrastructure information on the infrastructure acquired from the measurement apparatus regarding the predetermined area or region;
calculating an key performance indicator regarding the predetermined area or region based on inhabitant information relating to the predetermined area or region, and the infrastructure information relating to management of the predetermined area or region; and
storing the calculated key performance indicator in an key performance indicator storage module (115c).

8. An information processing method as recited in claim 7, wherein the calculating comprises calculating an key performance indicator from the key performance indicator stored in the key performance indicator storage module (115c) based on an index given by an input module which deals with the management of the predetermined area or region.

9. An information processing method as recited in claims 7 or 8,
further comprising:
receiving infrastructure information on the infrastructure acquired from the monitor regarding the predetermined area or region; and
storing the infrastructure information received in the infrastructure information storage module (115a).

10. An information processing method as recited in any of claims 7 to 9, further comprising:
storing in an inhabitant information storage module (115e) inhabitant information relating to the predetermined area or region and unique to the inhabitant and wherein
calculating a key performance indicator for the predetermined area or region is based on the infrastructure information stored in the infrastructure information storage module (115a) and the inhabitant information stored in the inhabitant information storage module (115e).

11. An information processing method as recited in any of claims 7 to 10, wherein the social infrastructure operation apparatus further includes an inhabitant information storage apparatus which stores inhabitant information relating to a predetermined area or region and unique to the inhabitant, the method comprising:
receiving infrastructure information on the infrastructure acquired from the monitor (31 a) regarding the predetermined area or region;
acquiring the inhabitant information from the inhabitant information storage apparatus;
storing the acquired inhabitant information in an inhabitant information storage module (115a); and
wherein calculating an key performance indicator for the predetermined area or region is based on the infrastructure information stored in the infrastructure information storage module(115e) and the inhabitant information stored in the inhabitant information storage module (115a).

12. A program executed by a social infrastructure operation apparatus used in a social infrastructure operation system including a monitor (31 a) which monitors an infrastructure, and configured to operate the infrastructure based on a relationship with a predetermined area or region including the infrastructure, the program causing the social infrastructure operation apparatus to perform the method of any of claims 7 to 11.
